# DEMANDE DE BREVET EUROPEEN

(11) **EP 2 346 009 A1**
(43) Date de publication de la demande: **20.07.2011**
(21) Numéro de dépôt: 10197419.4
(22) Date de dépôt: 30.12.2010
(51) Int. Cl.: G08B 13/14, G08B 29/18, E05B 45/00, E05B 67/00, G09F 3/03

(54) **Dispositif communicant et procédé de consignation d'un équipement**

(30) Priorité: 14.01.2010 FR 1050217
(71) Demandeur: Electricité de France, 75008 Paris (FR)
(72) Inventeur: Dionis, François, 92500, Rueil Malmaison (FR); Perrier de la Bathie, Eric, 78360, Montesson (FR); Joly, Vincent, 45570, Dampierre en Burly (FR)
(74) Mandataire: Cabinet Plasseraud

(57) **Abrégé**

L'invention concerne un dispositif communicant de consignation ou de condamnation d'un équipement comprenant des moyens de verrouillage (101) aptes à maintenir l'équipement (1) dans une position fixe, un module de communication (110) apte à communiquer des données relatives audit dispositif et un module d'alimentation locale (120) adapté pour alimenter électriquement au moins le module de communication, le module d'alimentation comprenant une unité de supervision de charge (123) arrangée pour mesurer le niveau de charge du module d'alimentation locale. L'invention concerne également un réseau de supervision d'une pluralité d'équipements utilisant un tel dispositif communicant ainsi qu'un procédé de supervision correspondant.

## Description

L'invention concerne le domaine de la supervision d'équipements dans des installations industrielles, et plus particulièrement l'utilisation de dispositifs communicants permettant de consigner certains équipements dans de telles installations industrielles.

Dans les installations industrielles de grande ampleur, et en particulier dans l'industrie nucléaire, des cadenas et des chaînes sont actuellement utilisés pour bloquer mécaniquement un équipement, en général une vanne, dans une position requise par l'exploitation. Un tel blocage mécanique en position fixe est requis soit pour des contraintes de sécurité du personnel, soit pour des contraintes de sûreté nucléaire. Ce type de blocage mécanique est appelé habituellement « consignation » ou « condamnation ».

La norme UTE C 18-510, au chapitre 2.4.14 « condamnation d'un appareil » indique que la condamnation d'un appareil consiste à effectuer les opérations nécessaires pour le mettre et le maintenir dans une position déterminée (que ce soit ouvert ou fermé), à interdire sa manoeuvre et à signaler que l'appareil condamné ne doit pas être manoeuvré.

Dans la pratique, sur le terrain, les équipements condamnés sont signalés par une pancarte fixée soit sur la chaîne, soit sur la boucle du cadenas.

Il existe actuellement un besoin d'aller plus loin en matière de fiabilisation de la gestion des consignations. En effet, la pose des consignations peut faire l'objet d'erreurs humaines et, par ailleurs, la supervision de ces consignations est difficile à effectuer lorsque celles-ci concernent une multitude d'équipements situés à des endroits difficiles d'accès, comme c'est le cas avec des vannes dans une installation industrielle.

Des solutions communicantes existent déjà pour surveiller des objets transportables, comme par exemple celles décrites dans la demande américains US 2002/0133704 A1 ou dans le brevet néerlandais NL 1018534. Cependant, ces solutions communicantes sont spécifiquement adaptées à des équipements transportables et ne garantissent pas le blocage mécanique d'un équipement comme une vanne. Par ailleurs, l'autonomie d'alimentation électrique des dispositifs présentés dans ces solutions communicantes n'est pas surveillée, ce qui les rend inadaptés à un environnement industriel dans lequel il convient de limiter autant que possible les interventions sur des consignes qui peuvent être posées pendant une longue durée.

Un des objets de la présente invention est donc de garantir la mise en position d'un équipement dans la position requise, ainsi que la supervision du maintien de l'équipement dans cette position, pendant une durée compatible avec des longs cycles industriels.

Un autre objet de la présente invention est de permettre la gestion optimisée de l'autonomie d'alimentation électrique de dispositifs servant à la consignation d'équipements, ceci en maîtrisant les coûts et les délais notamment dans le cas d'un grand nombre de dispositifs à gérer.

La présente invention propose à ce titre un dispositif de consignation d'un équipement comprenant des moyens de verrouillage aptes à maintenir l'équipement dans une position fixe, un module de communication apte à communiquer au moins des données relatives audits moyens de verrouillage et un module d'alimentation locale adapté pour alimenter électriquement au moins le module de communication. Le module d'alimentation locale comprend une unité de supervision de charge arrangée pour mesurer le niveau de charge du module d'alimentation locale. Il est ainsi possible à un opérateur de superviser l'autonomie restante du dispositif communicant grâce à la mesure faite par l'unité de supervision de charge.

Le module de communication comprend avantageusement une unité de transmission connectée à l'unité de supervision de charge et arrangée pour transmettre à un système de supervision distant une donnée de charge déterminée en fonction du niveau de charge mesuré, ce qui permet de superviser l'autonomie électrique du dispositif communicant à distance.

En particulier, la donnée de charge peut être avantageusement proportionnelle au niveau de charge mesuré, afin de permettre une supervision fine de l'autonomie électrique du dispositif communicant à distance.

Dans un mode de réalisation avantageux, cette donnée de charge est mesurée avec une fréquence de mesure prédéterminée et l'unité de transmission est activée périodiquement, avec une première fréquence de transmission prédéterminée inférieure à cette fréquence de mesure, pour transmettre cette donnée de charge au système de supervision distant. L'autonomie du dispositif communicant peut ainsi être optimisée en activant l'unité de transmission de manière réduite.

Dans un autre mode de réalisation avantageux, le module de communication comprend au moins une première unité d'affichage connectée au module de supervision de charge, laquelle est arrangée pour produire au moins un affichage prédéterminé en fonction du niveau de charge mesuré, ce qui permet la gestion locale de l'autonomie du dispositif communicant par un opérateur.

Préférentiellement, le dispositif communicant comporte un module de test connecté aux moyens de verrouillage et arrangé pour mesurer la variation d'au moins un paramètre desdits moyens de verrouillage à une fréquence de test prédéterminée et l'unité de transmission est activée périodiquement, avec une deuxième fréquence de transmission prédéterminée inférieure à la fréquence de test, pour transmettre au système de supervision distant une donnée de consignation déterminée en fonction de la variation mesurée, afin d'optimiser l'autonomie du dispositif communicant en activant l'unité de transmission de manière réduite.

De préférence, le dispositif communicant comporte un moyen d'identification passif électriquement, lequel permet l'identification du dispositif et son association à un équipement particulier tout en sauvegardant son autonomie électrique.

La présente invention vise par ailleurs un réseau de supervision d'une pluralité d'équipements comportant une pluralité de dispositifs communicant de consignation tels que décrits ci-avant et un serveur de supervision apte à recevoir des données de chacun desdits dispositifs communicant de consignation, chaque équipement de ladite pluralité d'équipements étant bloqué dans une position fixe par au moins un desdits dispositifs communicant de consignation.

La présente invention vise également un procédé de supervision du verrouillage d'un équipement par un dispositif communicant de consignation alimenté par un module d'alimentation locale, le procédé comprenant l'association du dispositif communicant de consignation communicant avec l'équipement placé dans une position fixe, suivie de la supervision du dispositif communicant de consignation, l'étape de supervision comprenant la mesure du niveau de charge de l'alimentation locale.

Avantageusement, l'étape de supervision comprend la transmission à un système de supervision d'au moins une donnée de charge déterminée en fonction du niveau de charge mesuré et/ou l'activation d'une unité d'affichage du dispositif en fonction de du niveau de charge mesuré, ce qui permet de gérer l'autonomie du dispositif communicant aussi bien à distance qu'en local.

Dans un mode de réalisation avantageux, la mesure du niveau de charge est effectuée périodiquement à une fréquence de mesure prédéterminée et l'étape de transmission comprend l'activation périodique d'une unité de transmission, à une première fréquence de transmission prédéterminée inférieure à la fréquence de mesure, pour transmettre la donnée de charge au système de supervision distant, afin d'optimiser l'autonomie du dispositif communicant en activant l'unité de transmission de manière réduite.

De préférence, lorsque le dispositif communicant de consignation comporte des moyens de verrouillage aptes à verrouiller l'équipement dans une position fixe, l'étape de supervision comporte une sous-étape de test durant laquelle la variation d'au moins un paramètre desdits moyens de verrouillage est mesurée périodiquement avec une fréquence de test prédéterminée, l'étape de transmission comprenant alors l'activation périodique d'une unité de transmission, avec une deuxième fréquence de transmission prédéterminée inférieure à la fréquence de test, pour transmettre au système de supervision distant une donnée de consignation déterminée en fonction de la variation mesurée, afin d'optimiser l'autonomie du dispositif communicant en activant l'unité de transmission de manière réduite.

Préférentiellement, un signal d'alerte est émis si aucune donnée n'est reçue du dispositif communicant par le système de supervision pendant une durée supérieure à un nombre prédéterminé de cycles de transmission ou en fonction de la donnée de charge et/ou de consignation reçue. Le superviseur est ainsi informé qu'une action correctrice est nécessaire sur le dispositif.

De préférence, lorsque le dispositif communicant de consignation comporte un premier moyen d'identification passif électriquement et que l'équipement présente un deuxième moyen d'identification passif électriquement, l'étape d'association comporte une sous-étape d'association virtuelle du dispositif et de l'équipement pendant laquelle lesdits moyens d'identification sont lus par un dispositif portable et associés dans une mémoire dudit dispositif portable. L'équipement et son dispositif sont ainsi associés en sauvegardant l'autonomie électrique du dispositif.

Dans un mode de réalisation avantageux, le procédé comprend une étape de préparation préalable du dispositif comprenant la vérification de la dernière donnée de charge transmise au système de supervision par le dispositif communicant, ce qui permet de vérifier que le dispositif a une autonomie suffisante avant de l'associer à l'équipement.

Dans un autre mode de réalisation avantageux, le procédé comprend une étape d'activation du dispositif communicant suite à son association avec l'équipement ainsi que la vérification de la communication entre le dispositif communicant et le système de supervision distant, afin d'éviter de consommer de l'énergie électrique stockée dans l'alimentation locale avant de s'être assuré que la communication avec le système de supervision est bien établie.

Le dispositif communicant de consignation, objet de l'invention, sera mieux compris à la lecture de la description et à l'observation des dessins ci-après dans lesquels :
- la figure 1 illustre un dispositif communicant de consignation selon la présente invention ;
- la figure 2A illustre les étapes d'un procédé de supervision d'un équipement verrouillé au moyen du dispositif communicant de consignation selon la présente invention ; et
- la figure 2B illustre en détail les sous-étapes constitutives de l'étape de supervision du procédé ci-avant selon la présente invention.

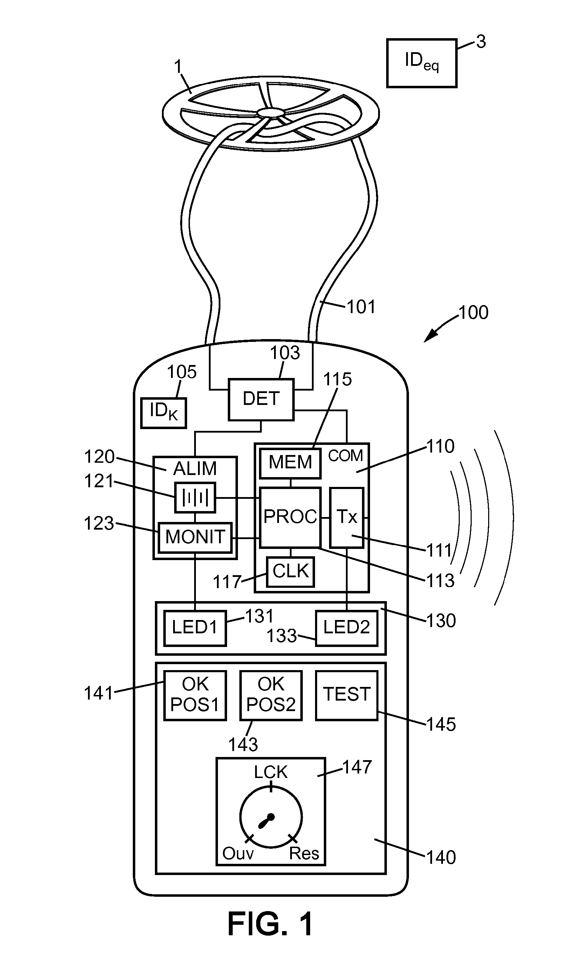

On se réfère tout d'abord à la **figure 1** sur laquelle est illustré un dispositif communicant de consignation 100 destiné à consigner un équipement 1 dans une position fixe. Un tel équipement peut être par exemple une vanne dans une installation industrielle, laquelle peut être consignée en position ouverte ou fermée selon le contexte.

Dans ce but, le dispositif 100 comprend des moyens de verrouillage 101 capables de maintenir l'équipement 1 dans une position fixe déterminée. De tels moyens de verrouillage 101 peuvent consister en un câble capable de serrer mécaniquement l'équipement (le volant d'une vanne à titre purement illustratif) afin de le maintenir dans une position donnée.

Le dispositif 100 comprend également un module de communication 110 capable de communiquer des données à un superviseur, notamment des données relatives aux moyens de verrouillage 101 afin d'informer le superviseur sur l'état de ces moyens.

Un tel module de communication 110 comprend ainsi une unité de transmission 111 afin de permettre la connexion du dispositif 100 à un système de supervision distant. Cette unité de transmission 111 est de préférence sans fil et comprend une antenne radio pouvant émettre et recevoir des signaux transmis par voie hertzienne, afin d'avoir une entière liberté quant à l'endroit où poser le dispositif 100, et communique avec le système de supervision distant au moyen d'un réseau sans fil, par exemple de type Zigbee, ZigbeePro, Occari, WirelessArt ou WiFi. Une telle antenne radio est de préférence intégrée à l'intérieur du boitier du dispositif communicant 100, afin d'éviter qu'elle ne soit endommagée pendant son transport. Un connecteur permet l'utilisation d'une antenne externe au boîtier.

Le module de communication 110 comprend également un processeur 113 capable de gérer l'unité de transmission 111 et connecté à des moyens de mémorisation 115 et une horloge 117. L'ensemble des composants du module de communication 110 peuvent être intégrés au sein d'une carte électronique.

Les moyens de mémorisation 115, par exemple un registre, permettent de mémoriser certaines données nécessaires au bon fonctionnement du dispositif 100. Ainsi, en ce qui concerne l'autonomie du module d'alimentation locale 120, le type des moyens d'alimentation 121 utilisés, et par conséquent leurs capacités respectives, vont évoluer au cours du temps. Il est donc possible de calibrer le dispositif 100 en fonction du type de moyens d'alimentation 121 neufs insérés. Les moyens de mémorisation 115 permettent de mémoriser, à cet effet, certaines caractéristiques de ces moyens d'alimentation 121 telles que leur capacité ou leur courbe caractéristique de décharge. A chaque changement des moyens d'alimentation 121, les valeurs stockées dans les moyens de mémorisation 115 peuvent être réinitialisées en fonction des caractéristiques des nouveaux moyens 121.

Le dispositif 100 comprend par ailleurs un module d'alimentation locale 120 permettant d'alimenter les composants du dispositif 100 nécessitant de l'énergie électrique, entre autres le module de communication 110, de façon complètement autonome.

Un tel module d'alimentation comporte des moyens de stockage d'énergie 121 tels que des piles (par exemple au format standard AAA), ou une batterie, pouvant être changés sans démonter le boîtier du dispositif 100. La durée de vie de la pile ou de la batterie employées peut avoir une durée minimale afin de garantir le bon fonctionnement du dispositif 100 durant une période compatible avec le type d'installation industrielle concerné (par exemple 24 mois dans le cas d'une campagne de combustible nucléaire).

De tels moyens de stockage d'énergie 121 peuvent être placés dans un compartiment du boîtier accessible par l'ouverture d'un cache dédié. Il est également possible de couler une pile, ainsi que l'électronique du module de communication 110, dans de la résine dans l'optique de respecter la norme ATEX.

Le module d'alimentation locale 120 comprend en outre une unité de supervision de charge 123 capable de mesurer le niveau de charge des moyens de stockage d'énergie 121, et donc l'autonomie du module d'alimentation locale 120. Cette mesure du niveau de charge peut s'effectuer, par exemple, en mesurant la tension aux bornes des moyens de stockage 121 et permet de déterminer une donnée dite « de charge » en fonction du niveau de charge mesuré du module d'alimentation locale. Une telle donnée de charge peut être avantageusement proportionnelle à la mesure effectuée ou simplement indicative que ce niveau de charge est correct si la valeur mesurée dépasse un certain seuil prédéterminé.

Ainsi, grâce la détermination d'une telle donnée de charge, il est possible d'avoir une estimation de l'autonomie restante du dispositif communicant 100 afin de déterminer si celle-ci est suffisante pour consigner l'équipement 1 correspondant pendant une durée compatible avec la consignation souhaitée par le superviseur.

L'unité de supervision de charge 123 est par ailleurs avantageusement connectée à l'unité de transmission 111 du module de communication 110, cette unité 111 étant alors arrangée pour transmettre au moins une donnée de charge relative au niveau de charge du module d'alimentation locale 105 au système de supervision distant, cette donnée de charge pouvant être avantageusement proportionnelle à la mesure du niveau de charge afin de permettre une supervision fine de l'autonomie du dispositif communicant.

Il est ainsi possible de superviser l'autonomie restante des différents dispositifs communicants déjà en place quasiment en temps réel et de façon centralisée, par l'intermédiaire du système de supervision distant. Le superviseur en charge de cette tâche peut alors décider du remplacement ou du rechargement du dispositif 100 en fonction de son niveau de charge restant.

Dans le mode avantageux où la donnée de charge transmise est proportionnelle à la mesure du niveau de charge, le superviseur dispose d'une connaissance précise de l'autonomie restante de l'ensemble des dispositifs communicants et peut donc planifier de manière plus efficace et anticiper le remplacement de certains dispositifs communicants, ou leur recharge électrique, en fonction de critères logistiques, de difficulté d'accès et de coût.

Cet avantage technique est notamment important lorsqu'une grande quantité de dispositifs communicants sont à surveiller simultanément, ce qui induit une problématique logistique nécessitant d'anticiper autant que possible les opérations de remplacement et/ou de recharge de ces dispositifs communicants.

Dans la mesure où le module de communication 110, et en particulier son unité de transmission 111, sont les éléments les plus consommateurs de ce dispositif 100, il est avantageux de n'activer le module de communication 110 que lorsque cela est nécessaire afin d'optimiser l'autonomie du dispositif 100. L'horloge 117 permet l'activation et la désactivation périodiques des composants du module de communication 110 à certaines fréquences correspondant à des actions bien précises.

Ainsi, il est prévu d'une part d'effectuer périodiquement la transmission de données vers le système de supervision sous forme de trames de données. L'horloge 117 va donc activer l'unité de transmission 111 à certaines fréquences, afin que celle-ci transmette une trame de données avant de se désactiver. La fréquence f_{Tx} d'activation de l'unité de transmission 111, pour transmettre ces informations vers le système de supervision, peut être paramétrable (entre 1 et 40 minutes), voire fixée à une certaine valeur (par exemple 4 minutes). Cependant, la transmission de trames de données peut aussi être effectuée à une fréquence moins élevée, toujours pour optimiser l'autonomie d'alimentation du dispositif 100.

La mesure du niveau de charge du dispositif 100, et la détermination de la donnée de charge qui en découle, peut elle aussi être effectuée périodiquement, par exemple à une certaine fréquence de mesure f_{M}, laquelle n'est pas obligatoirement égale à la fréquence de transmission f_{Tx,M} d'une trame de mesure comprenant cette donnée au système de supervision, cette dernière fréquence f_{Tx,M} pouvant être paramétrable. Il est ainsi particulièrement avantageux d'utiliser une fréquence de transmission f_{Tx,M} inférieure à la fréquence de mesure f_{M}, pour des raisons d'économie d'énergie. Par exemple, il est possible de transmettre les données de charge seulement toutes les cinq ou vingt mesures.

Par ailleurs, le module de communication comprend des moyens d'affichage 130 permettant de renseigner l'opérateur manipulant le dispositif 100 sur certains de ses paramètres.

Les moyens d'affichage 130 comprennent une première unité d'affichage 131 connectée à l'unité de supervision de charge 123 et permettant un affichage prédéterminé en fonction de la donnée relative au niveau de charge du module d'alimentation locale déterminé par l'unité de supervision de charge, ce qui donne une indication du niveau de charge du dispositif 100 à un opérateur qui le manipule. Ainsi lorsque le niveau de charge détecté par le module de supervision de charge atteint un certain seuil bas prédéterminé, l'application de supervision déclenche une alerte de niveau de charge. L'unité d'affichage 131 indique une telle alerte, par exemple en clignotant en rouge, afin de prévenir tout opérateur à proximité.

Les moyens d'affichage 130 peuvent aussi comporter une deuxième unité d'affichage 133 associée à l'unité de transmission 111 afin de donner une indication sur l'état de la communication avec le système de supervision. De telles unités d'affichage peuvent consister, par exemple, en une ou plusieurs diode(s) électroluminescente(s) et permettent d'avertir l'opérateur manipulant le dispositif 100 respectivement de l'état de charge du module d'alimentation et de l'état de communication du module de communication.

Ainsi, lorsque l'opérateur prépare le dispositif 100 pour le poser sur l'équipement 1 à consigner, il peut être informé par rapport au niveau de charge du dispositif et décider de l'utiliser (ou non) en fonction de cette information, comme cela sera illustré ultérieurement.

Le module de communication peut comprendre également un moyen d'identification 105 choisi pour être électriquement passif afin d'augmenter l'autonomie énergétique du dispositif 100. On entend ici par « électriquement passif » le fait que le moyen d'identification 105 ne consomme pas d'énergie électrique et donc ne décharge pas le module d'alimentation locale 120, auquel il n'est pas connecté électriquement. Le moyen d'identification 105 peut consister en une étiquette RFID ou un code barre 2D, par exemple.

Un tel moyen d'identification 105 permet d'associer un dispositif communicant 100 particulier à un équipement 1 particulier. Si l'équipement 1 dispose lui aussi d'un moyen d'identification 3, comme par exemple une étiquette RFID ou un code barre 2D, alors un repérage informatique est possible au moyen d'un assistant numérique personnel (PDA en anglais), repérage au cours duquel seront mémorisées conjointement l'identité du dispositif communicant de consignation et l'équipement auquel celui-ci est associé.

Le fait d'utiliser un moyen d'identification 105 passif électriquement est particulièrement avantageux dans le cas présent, dans la mesure où l'autonomie du dispositif 100 en est augmentée, ce qui est particulièrement utile lorsque la consignation de l'équipement 1 est prévue pour durer un certain temps.

Le dispositif 100 comprend par ailleurs un module de test 103 connecté aux moyens de verrouillage 101. Ce module 103 est capable de mesurer la variation d'au moins un paramètre relatif à ces moyens de verrouillage, en mesurant ce paramètre et en le comparant à une valeur de référence par exemple, afin d'obtenir de déterminer une donnée dite « de consignation » donnant une indication de l'état verrouillé (ou non) des moyens de verrouillage 101 ou de la compromission de leur intégrité. Le changement d'état des moyens de verrouillage peut être ainsi détecté au moyen de ce module de détection 103 et la donnée de consignation indiquant ce changement d'état peut être communiquée à un superviseur au moyen du module de communication 110.

Le module de détection 103 peut par exemple détecter la disparition d'un courant électrique circulant dans les moyens de verrouillage quand ceux-ci sont traversés en permanence par un courant électrique. Le paramètre à surveiller peut ainsi être l'intensité du courant électrique, et une variation d'intensité dépassant un certain seuil prédéterminé peut être indicative du déverrouillage des moyens 101.

La donnée de consignation peut être directement proportionnelle à la variation du paramètre considéré, auquel cas la vérification de l'état des moyens 101 se fera à distance, ou peut être déterminée en fonction d'une comparaison de cette variation avec un seuil prédéterminé dans le dispositif communicant, auquel cas la donnée de consignation sera simplement indicatrice du bon verrouillage (ou non) des moyens de verrouillage 101.

Ce test de détection peut être continu, mais il sera de préférence effectué périodiquement avec une certaine fréquence prédéterminée de test f_{Test}, pour optimiser l'autonomie du dispositif 100. Une telle fréquence de test f_{Test} peut être paramétrable (par exemple entre 1 et 5 minutes) ou fixée à une certaine valeur par défaut (1 minute par exemple). La fréquence de transmission f_{Tx,Test} d'une trame de données comprenant une donnée de consignation indicative du changement d'état des moyens 101 est avantageusement inférieure à la fréquence de test f_{Test}, afin de limiter la consommation de l'unité de transmission 111.

Le dispositif 100 peut par ailleurs comporter des moyens d'activation 140 permettant à l'opérateur d'activer certaines fonctionnalités du dispositif 100. Dans l'exemple présent, les moyens d'activations 140 comprennent trois boutons poussoirs 141,143 et 145 afin respectivement de communiquer le fait que l'équipement 1 est positionné dans une première position (par exemple ouverte), de communiquer le fait que l'équipement 1 est positionné dans une deuxième position (par exemple fermée) et d'enclencher une procédure de test de l'état des moyens de verrouillage 101. Ces boutons poussoirs 141,143 et 145 peuvent être protégés physiquement, par exemple en étant recouverts de boutons « Lexan », et pilotés par logiciel.

Les moyens d'activation 140 comprennent par ailleurs une serrure 147 capable d'activer un changement de mode opératoire du dispositif 100 par l'insertion d'une clé spécifique à l'opérateur. Dans l'exemple de la figure 1, cette serrure peut prendre trois positions « Ouv », « LCK » et « Res » afin de mettre le dispositif 100 respectivement dans le mode « Ouvert », « Bloqué » et « Réseau » comme cela sera illustré ultérieurement.

Ainsi, le module de communication 110 peut être activé de quatre façons différentes :
- lors de l'insertion de nouveaux moyens d'alimentation 121 ;
- lors de la mise en service par l'opérateur au moyen de la clé et de la serrure 147 ;
- lorsque l'opérateur appuie sur le bouton 145 de test ; et
- de façon interne, grâce à l'horloge 117, pour les cycles de mesure, de test et de transmission radio.

Ces phases limitées d'activation permettent de limiter la consommation électrique du module de communication 110 au minimum nécessaire, sauvegardant ainsi son autonomie électrique.

Le dispositif communicant de consignation 100 est par ailleurs préférentiellement conçu pour résister à des contraintes d'environnement sévères : température élevée, projections de produits acides ou basiques, chocs, rayonnements ionisants. En matière de rayonnements ionisants, une exigence peut être de résister à des valeurs de radiation comprises entre 200 et 300 Gy. Le dispositif peut également être conçu pour répondre à la réglementation ATEX.

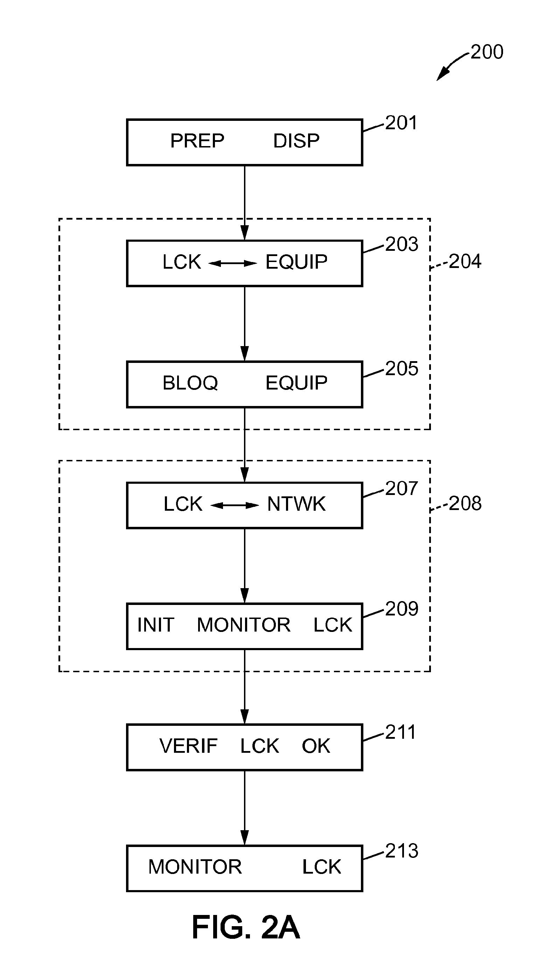

On se réfère maintenant à la **figure 2A****,** sur laquelle sont illustrées les étapes d'un procédé 200 de supervision du verrouillage d'un équipement par un dispositif communicant de consignation 100 tel que décrit ci-avant.

Le procédé 200 comprend une étape préalable de préparation 201 du dispositif communicant de consignation au cours de laquelle la donnée relative au niveau de charge du module d'alimentation locale du dispositif communicant est vérifiée.

Pour ce faire, avant toute intervention sur le terrain, l'opérateur chargé de consignations accède à une application de supervision, sur un serveur de supervision, pour prescrire la liste des consignations à poser ou à déposer, en les identifiant par un repère fonctionnel.

Pour chaque consignation à poser, l'opérateur précise la position requise de l'équipement à surveiller, ainsi que la durée de la pose de la consignation prévue. Une durée par défaut, par exemple 90 jours, peut être prévue ici. Cette information sur la durée de pose de la consignation sert à vérifier que le module d'alimentation locale 120 du dispositif communicant de consignation dispose de suffisamment d'autonomie pour fonctionner le temps de supervision nécessaire.

Ainsi, avant de partir sur le lieu des équipements à consigner, l'opérateur vérifie que les dispositifs communicants 100 préparés pourront fonctionner sur toute la durée estimée. Pour cela, il accède à un module annexe de l'application de supervision, sans forcément interrompre cette supervision, qui lui permet de scanner les dispositifs communicants 100, de retrouver leur identifiant au moyen de leur module d'identification 105 et d'interroger la base de données du superviseur pour connaître le dernier niveau de charge (i.e. d'énergie résiduelle) communiqué par le dispositif communicant de consignation.

Après que le dispositif communicant de consignation ait été scanné, deux cas de figures se présentent :
- Soit le module d'alimentation locale du dispositif communicant de consignation a une durée de vie compatible avec le temps de supervision prévu. Dans ce cas, les moyens d'alimentation du dispositif ne sont pas changés. Le niveau de charge retenu est la dernière valeur transmise par le dispositif communicant 100 avant sa dépose, pondéré par le coefficient d'autodécharge des moyens d'alimentation. Pour indiquer cette situation, la première unité d'affichage 131 peut alors clignoter un certain de fois dans une couleur précise. Par exemple, cette indication peut consister en un clignotement de 30 secondes en vert par « flashs », c'est à dire à un allumage pendant seulement 30% d'un cycle (LCO = 30%).
- Soit le module d'alimentation locale du dispositif communicant de consignation n'a pas une durée de vie compatible avec le temps de supervision prévu. Il est alors nécessaire de changer les moyens d'alimentation 121 ou de les recharger. Dans ce cas, la mise en place des nouveaux moyens d'alimentations 121 réinitialise le compteur de charge du module d'alimentation dans le dispositif communicant de consignation. L'application de supervision sera mise à jour dès la prochaine mise en route du dispositif communicant de consignation. Pour indiquer cette situation, la première unité d'affichage 131 peut alors clignoter un certain de fois dans une couleur précise diffère de celle indiquée précédemment. Par exemple, cette indication peut consister en un clignotement de 30 secondes en rouge par « flashs », c'est à dire toujours à un allumage pendant seulement 30% d'un cycle (LCO = 30%).

Dans un premier mode de réalisation de cette étape préalable de préparation, l'opérateur vérifie dispositif par dispositif que la durée de fonctionnement est compatible et préenregistre le couple équipement-dispositif dans un dispositif portable, par exemple dans un PDA, permettant de se déplacer sur le lieu des équipements à consigner.

Dans un autre mode de réalisation de cette étape préalable de préparation, l'opérateur vérifie sommairement que les niveaux de charge sont suffisants et part sur le lieu des équipements à consigner avec plus de dispositifs communicants 100 que nécessaire, sachant que la vérification du niveau de charge de ces dispositifs sera in fine effectuée lors de la pose de ceux-ci.

Le dispositif portable de l'opérateur est chargé avec les données d'un tour de ronde à effectuer par l'opérateur, ainsi qu'avec les caractéristiques de tous les dispositifs de verrouillage du site, afin d'éviter une préparation systématique des associations équipement- dispositifs de verrouillage avant de partir sur le terrain.

Le fait de ne pas changer les moyens d'alimentation 121 des dispositifs communicants 100 avant chaque pose peut permettre d'économiser ces moyens d'alimentation et d'éviter des manutentions inutiles. Les durées de vie des cadenas prêts à être posés sont donc hétérogènes.

Une fois l'opérateur à proximité de l'équipement 1 à consigner, muni de son dispositif communicant de consignation préparé, l'association aussi bien virtuelle (étape 203) que physique (étape 205) du dispositif communicant de consignation avec cet équipement 1 est alors effectuée.

L'association virtuelle 203 est une étape au cours de laquelle le dispositif communicant de consignation et l'équipement à surveiller sont associés informatiquement. Une telle étape d'association virtuelle 203 met en oeuvre l'équipement à surveiller, le dispositif communicant de consignation et le dispositif portable (PDA) de l'opérateur.

Pour effectuer cette association virtuelle, le dispositif portable de l'opérateur est équipé d'un lecteur capable de détecter le code du module d'identification du dispositif communicant 100. Lorsque ce dernier et l'équipement sont marqués au moyen d'une étiquette RFID, le dispositif portable de l'opérateur est capable de détecter à la fois le code de l'étiquette RFID de l'équipement 1 à surveiller et le code de l'étiquette RFID du dispositif communicant 100, dans un ordre indifférent.

De préférence, la durée maximale entre ces deux lectures, pour un couple dispositif-équipement, est d'une minute. Cette durée est cependant paramétrable. Lorsque le code est détecté, un bip peut retentir. Le dispositif portable de l'opérateur peut également afficher une icône avec le type d'équipement et/ou de dispositif détecté.

Si la durée maximale entre les deux lectures des étiquettes du dispositif communicant de consignation et de l'équipement est dépassée, alors il peut être prévu d'imposer le redémarrage du processus d'association. Pour cela, le dispositif portable de l'opérateur efface la première étiquette lue pour que l'utilisateur puisse re-scanner à nouveau les deux étiquettes. L'opérateur peut également interrompre volontairement l'étape d'association en cours sur son dispositif portable.

Avantageusement, la distance de lecture est limitée pour être inférieure à une certaine distance prédéterminée, par exemple 5 cm, afin d'éviter toute lecture aléatoire de l'étiquette d'un équipement à proximité. En effet, le sac de dispositifs communicants 100 de l'opérateur est une source potentielle d'erreur lors de cette opération de lecture.

Lorsque le dispositif portable de l'opérateur scanne l'identifiant d'un dispositif communicant 100, une première ligne s'affiche sur l'écran du dispositif portable. Cette première ligne peut comprendre l'icône de type cadenas, le repère fonctionnel du cadenas, et la durée de vie résiduelle (i.e. l'autonomie) estimée du module d'alimentation du dispositif communicant 100, par exemple en jours.

Lorsque le dispositif portable de l'opérateur scanne l'identifiant d'un équipement 1, une deuxième ligne s'affiche sur l'écran du dispositif portable de l'opérateur. Cette deuxième ligne comprend l'icône de type équipement, le repère fonctionnel de l'équipement et la position requise, ainsi que la durée prévisionnelle de pose.

Une fois que les deux lignes sont affichées, l'opérateur peut les associer et les envoyer en temps réel, par exemple via un réseau sans-fil, au système de supervision.

Dans un mode de réalisation avantageux, un seul dispositif communicant 100 est associé à un seul équipement 1 à un instant précis. Il est cependant possible d'utiliser plusieurs dispositifs communicants 100 pour un même équipement 1, si cela s'avère nécessaire. Il est possible de changer dispositif communicant sur le terrain, mais il est préférable de ne pas associer un dispositif communicant 100 à un équipement 1 s'il n'a pas été préalablement enregistré dans le système de supervision, pour des raisons de sécurité.

L'étape 205 d'association physique, quant à elle, est une étape au cours de laquelle le dispositif communicant 100 et l'équipement 1 à surveiller sont solidarisés mécaniquement.

Cette association physique consiste à :
- positionner l'équipement 1 à consigner dans la position requise ;
- accéder éventuellement à des informations d'aide contextuelle sur le dispositif portable de l'opérateur ; et
- solidariser mécaniquement l'équipement 1 avec le dispositif communicant 100 afin de maintenir l'équipement 1 dans une position bloquée.

Si les moyens de verrouillage 101 du dispositif communicant 100 consistent en un câble, cette dernière manipulation revient à placer le câble autour de l'équipement 1, puis le tendre de telle sorte que la manoeuvre de l'équipement soit impossible. Il peut être alors approprié de verrouiller mécaniquement le câble avec une clé dédiée. Si les moyens d'activation 140 comprennent une serrure 147 telle qu'illustrée sur la figure 1, l'opérateur fait ceci en tournant la clé dans cette serrure vers la position « LCK ».

Lors de la pose de la consignation, la vérification de la position de l'équipement est particulièrement importante. En effet, en cas d'erreur de pose, la probabilité que le vérificateur ne détecte pas l'erreur augmente. Malheureusement, dans le cas de dispositif communicant 100 sans fil, il n'est pas toujours possible de disposer d'un signal électrique indiquant la position précise de l'équipement.

Afin de contourner cette difficulté, le dispositif portable de l'opérateur (PDA) peut être adapté pour présenter des informations permettant de vérifier que la position de l'équipement requise est bien respectée, par exemple en lui donnant accès à des documents sous forme de texte, de diagrammes, d'images, de voix ou de vidéo. Un tel accès à ces informations peut être facilité par la lecture de l'étiquette de l'équipement 1.

L'ordre des deux étapes d'association virtuelle 203 et physique 205 n'est pas figé et peut être inversé, ces deux étapes formant ensemble une étape globale 204 d'association du dispositif communicant 100 avec l'équipement 1 à consigner.

Une fois que le dispositif communicant 100 est bien associé à l'équipement 1 à consigner, une étape 207 d'intégration virtuelle du dispositif communicant de consignation dans un réseau de supervision est effectuée sur requête de l'opérateur.

Cette étape est initiée sur activation manuelle de la part de l'opérateur. Par exemple, lorsque les moyens d'activation 140 comprennent une serrure 147 telle qu'illustrée sur la figure 1, cette étape 207 est initiée par l'opérateur en tournant la clé dans cette serrure vers la position « Res ». Une fois cette activation manuelle effectuée, la communication du dispositif communicant 100 avec le système de supervision, par exemple grâce à un réseau sans fil, est initialisée. Tant que le dispositif communicant 100 n'est pas intégré dans le réseau, la deuxième unité d'affichage 133 reste dans un état particulier (il clignote par exemple en vert).

A ce stade, les informations applicatives (équipement surveillé, position de pose, etc.) ne sont pas encore prises en compte, seule la fonction de communication est activée. Les informations transmises par le dispositif communicant 100 sont au moins les suivantes :
- Identité du dispositif communicant de consignation ;
- Fermeture du dispositif communicant de consignation (verrouillage) ;
- Etat ouverture / fermeture du dispositif communicant de consignation ; et
- Energie résiduelle.

Deux trames de données peuvent être émises par l'unité de transmission 111 : une trame de message applicatif et une trame de diagnostic.

Une fois que le dispositif communicant de consignation est intégré dans le réseau, la deuxième unité d'affichage 133 passe dans un autre état particulier (il cesse de clignoter et s'allume en vert continu durant une minute, par exemple) pour indiquer à l'opérateur que l'opération d'intégration au réseau s'est bien déroulée.

Il est préférable de fixer un délai maximum d'intégration du dispositif communicant de consignation dans le réseau. Ce délai peut être fixé à 5 minutes par exemple. Passé ce délai, la deuxième unité d'affichage 133 entre dans un nouvel état particulier (il clignote en rouge pendant 1 minute par exemple), puis le dispositif communicant 100 s'arrête de fonctionner. Pour le relancer, les moyens d'activation 140 peuvent être utilisés pour arrêter l'électronique puis la réactiver. Si ces moyens d'activation 140 comprennent une serrure 147 telle qu'illustrée sur la figure 1, cette relance peut être faite par l'opérateur en tournant la clé dans cette serrure vers la position « LCK » (éventuellement en position ouverture si l'on veut changer de dispositif 100), puis en la tournant à nouveau la clé sur la position « Res ».

Une fois le dispositif communicant de consignation bien intégré dans le réseau de supervision (étape 207), il est alors possible de requérir sa mise sous supervision (étape 209).

Pour requérir la mise sous supervision du dispositif communicant de consignation, l'opérateur peut indiquer la position de l'équipement consigné en utilisant l'un des boutons poussoirs 141 ou 143.

Ainsi, dans le cas où l'équipement 1 ne peut prendre que deux positions ouverte ou fermée, si l'équipement est consigné en position fermée, l'opérateur appuie alors sur le premier bouton 141 (« OK vanne fermée ») ou si l'équipement est consigné en position ouverte, l'opérateur appuie sur le deuxième bouton 143 (« OK vanne ouverte »).

Lorsque l'opérateur utilise l'un de ces boutons poussoirs, la requête de mise sous supervision « applicative » est alors envoyée jusqu'à l'application de supervision grâce à l'unité de transmission 111.

La deuxième unité d'affichage 133 peut alors indiquer un état d'attente de validation (par exemple en clignotant en vert) jusqu'à ce qu'une information de validation de la mise sous supervision soit renvoyée du réseau de supervision jusqu'au dispositif communicant 100. Un délai d'attente maximum d'attente de la réception d'une telle information de validation peut être fixé, de l'ordre de deux minutes par exemple.

Les informations transmises par le dispositif communicant de consignation avec la requête de mise sous supervision « applicative » par le cadenas peuvent être les suivantes :
- Identité du dispositif communicant de consignation,
- Fermeture du dispositif communicant de consignation (verrouillage),
- Etat ouverture / fermeture du dispositif communicant de consignation,
- Energie résiduelle.

L'information de validation de la mise sous supervision applicative retournée au dispositif communicant 100 peut être positive ou négative. En cas de succès, la deuxième unité d'affichage 133 peut passer dans un autre état (par exemple en restant allumée en vert de façon continue durant une minute).

De préférence, un deuxième appui sur l'un des deux boutons poussoirs 141,143 (« OK vanne fermée » ou « OK vanne ouverte ») est ignoré. Il peut être avantageux, pour changer la déclaration de la position de l'équipement 1, de demander l'arrêt de l'électronique, puis la relance de la phase d'intégration dans le réseau, afin d'éviter toute erreur de manipulation.

En cas d'échec durant cette étape, c'est à dire si le délai de retour de l'information de validation de la mise sous supervision applicative est dépassé, ou bien si un problème est détecté (comme par exemple la déclaration d'une mauvaise position par rapport à ce qui avait été prévu), alors la deuxième unité d'affichage 133 peut indiquer un état d'échec (par exemple en clignotant en rouge pendant 1 minute). Il est possible alors de permettre la relance d'une séquence de déclaration de mise sous supervision en position requise en appuyant sur l'un des deux boutons du dispositif communicant de consignation sans qu'aucune temporisation ne soit appliquée.

Il est possible de prévoir une durée maximale d'attente entre l'intégration du dispositif communicant de consignation dans le réseau et la demande de mise sous supervision. Une telle durée maximale d'attente n'est cependant pas nécessaire, afin de permettre de laisser à l'utilisateur le choix de l'ordre des deux étapes d'intégration 207 et de requête en mise sous supervision 209. Ces deux étapes 207 et 209, dans un ordre quelconque, forment donc une étape globale 208 d'activation du dispositif de supervision.

Une fois que le dispositif communicant de consignation est en fonctionnement et que la supervision est activée, une étape 211 de vérification locale peut être prévue pour pouvoir réinterroger ce dispositif en local afin de vérifier son bon fonctionnement. C'est le cas par exemple pour des activités de double vérification de pose, de rondes de vérification, voire d'essais périodiques sur ces équipements.

Le principe d'utilisation d'une telle étape de vérification locale peut être implémenté simplement. L'opérateur appui sur le troisième bouton poussoir 145 dédié au test du dispositif communicant de consignation en place. L'appui sur ce bouton 145 de test active le processeur du module de communication 110 du dispositif communicant 100, qui transmet l'ensemble des informations qu'il génère habituellement, à la fois du point de vue réseau et du point de vue applicatif, au superviseur par l'intermédiaire du réseau de supervision.

Le début de transmission de ces informations peut être indiqué par les deux unités d'affichage 131 et 133 du dispositif communicant de consignation, lesquels clignotent par exemple en vert. En cas de succès de la transmission, à la fois du point de vue réseau et du point de vue supervision, les deux unités d'affichages 131 et 133 passent en vert continu, en cas d'échec, ces moyens d'affichage passent en rouge clignotant.

Une fois le dispositif communicant de consignation en fonctionnement et sa mise sous supervision activé, le superviseur est en attente des mesures provenant de celui-ci durant une étape de supervision 213.

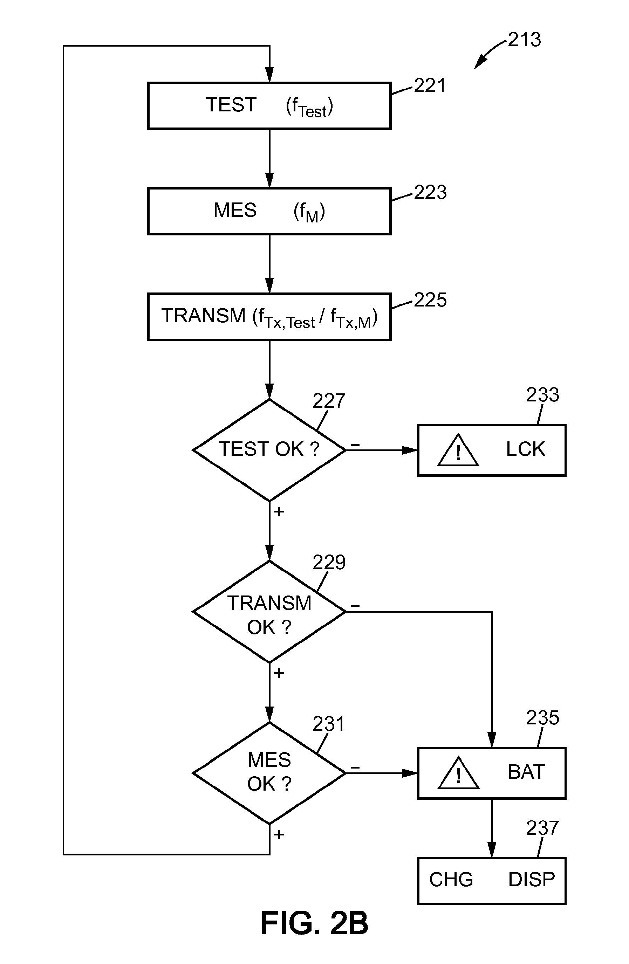

La **figure 2B** illustre plus particulièrement une telle étape 213 de supervision.

Au cours de cette étape 213 situation, deux cycles cohabitent : un cycle de test des moyens de verrouillage, correspondant à l'étape de test 221, et un cycle de mesure du niveau de charge du module d'alimentation locale 105 du dispositif communicant 100, correspondant à l'étape de mesure 223.

Le cycle 221 de test consiste à effectuer le test périodique des moyens de verrouillage du dispositif à une certaine fréquence de test f_{Test}. Ainsi, par exemple toutes les minutes, le processeur 113 du dispositif communicant 100 se réveille, puis effectue un test sur les moyens 101 de verrouillage du dispositif (par exemple un test de continuité du câble, où la variation d'un paramètre de continuité du câble est détectée).

Si les moyens 101 de verrouillage répondent positivement à ce test (ce qui garantit leur maintien en position verrouillée et leur intégrité), l'information peut être simplement stockée dans un premier mode de réalisation, sans qu'aucune donnée ne soit transmise au système de supervision. Si par contre, le résultat du test est négatif, ce qui peut indiquer que l'intégrité de ces moyens 101 de verrouillage est remise en cause, l'unité de transmission 111 peut être activée pour pouvoir émettre une donnée de consignation indicative du déverrouillage du dispositif dans un premier mode de réalisation.

Dans un autre mode de réalisation, une donnée de consignation proportionnelle à la variation d'un paramètre des moyens de verrouillage sera systématiquement transmise avec une fréquence de transmission f_{Tx,Test}, de préférence inférieure à la fréquence de test f_{Test}. La détermination du bon verrouillage (ou non) des moyens de verrouillage du dispositif sera alors effectuée au niveau du système de supervision.

A chaque cycle de mesure, les informations suivantes peuvent être collectées : date, heure, état des moyens de verrouillage, autonomie, diagnostic (état des piles), alerte (en cas d'appui sur la mauvaise touche).

Le cycle 223 de mesure consiste à mesurer périodiquement le niveau de charge de l'alimentation locale 105 du dispositif 100, à une certaine fréquence de mesure f_{M}, et à déterminer une donnée de charge indicative de niveau de charge.

L'étape 225 de transmission consiste à transmettre au superviseur des données informant sur l'état du dispositif communicant 100. Cette étape peut consister d'une part à activer l'unité de transmission du dispositif 100 périodiquement, à une certaine fréquence de transmission f_{Tx,M} avantageusement inférieure à la fréquence de mesure f_{M}, afin de transmettre la donnée de charge déterminée en fonction de la mesure du niveau de charge de l'alimentation locale 105.

Ainsi, la fonction de communication du dispositif communicant de consignation se réveille périodiquement, par exemple toutes les 3 ou 4 minutes, puis lance la transmission d'une trame de mesure pouvant contenir des informations sur le niveau d'accumulation de courant, la tension d'une pile utilisée dans le module d'alimentation locale, la température interne du dispositif 100, etc. au système de supervision.

L'étape 225 de transmission peut consister d'autre part à transmettre une donnée de consignation déterminée en fonction de la variation d'un paramètre des moyens de verrouillage, dans une trame de test comprenant des informations sur l'état de verrouillage du dispositif, la position de l'équipement verrouillé, un horodatage, l'identité du dispositif 100 utilisée, etc. avec une fréquence de transmission f_{Tx,Test}, de préférence inférieure à la fréquence de test f_{Test}.

Cette approche en deux cycles distincts, avec des fréquences de test et de mesure supérieures aux fréquences de transmission respectives, permet d'économiser les batteries du dispositif dans la mesure où l'activation de l'unité de transmission 111 est particulièrement consommatrice d'énergie. Les fréquences de ces deux cycles peuvent être configurables par logiciel, afin de permettre différents scénarios de tests.

En salle de commande ou au bureau des consignations de l'installation industrielle dans laquelle sont consignés les équipements, chacune des consignations est surveillée par le superviseur. Toute alerte détectée est mise en évidence.

Les alertes ont deux origines possibles : la transmission d'un défaut par un dispositif communicant de consignation ou la non-réception d'informations du dispositif communicant de consignation pendant une durée supérieure à un certain nombre de cycles de transmission.

Ainsi, lors des trois étapes 227,229 et 231 de vérification, ces deux conditions sont vérifiées afin de déterminer si le dispositif communicant 100 présente un risque de déverrouillage.

Si d'une part la donnée transmise indicative de l'état des moyens 101 de verrouillage du dispositif 100 indique que ceux-ci seraient déverrouillés ou que l'intégrité de ces moyens de verrouillage serait remise en cause (première étape 227 de vérification), alors un premier signal d'alerte est généré et émis (étape 233). Ce premier signal d'alerte indique le risque d'un déverrouillage de l'équipement 1 et présente un degré d'urgence maximal nécessitant le déplacement d'un opérateur sur le terrain pour vérifier l'état de l'équipement 1 et re-verrouiller celui-ci.

Si d'autre part le superviseur observe qu'un certain nombre de cycles consécutifs (deux voire plus en fonction des tests avec les utilisateurs) de transmission de l'état du dispositif communicant 100 n'ont pas été reçus (deuxième étape 229 de vérification), alors un deuxième signal d'alerte est également généré et émis (étape 235). Ce deuxième signal d'alerte indique que l'unité de transmission 111 n'a pas été en mesure de transmettre de données, et présente un degré d'urgence moindre que l'alerte précédente, nécessitant néanmoins également le déplacement d'un opérateur pour diagnostiquer le dispositif communicant 100 défaillant.

Enfin, si la donnée transmise indicative de l'état de charge du module d'alimentation locale 120 que celui serait déchargé reçus (troisième étape 231 de vérification), alors le deuxième signal d'alerte est également généré et émis (étape 235). Ce deuxième signal d'alerte indique qu'il faut recharger le dispositif communicant 100, ou le remplacer par un dispositif chargé, ce qui présente un degré d'urgence moindre que la première alerte, mais nécessite néanmoins également le déplacement d'un opérateur pour s'occuper du dispositif communicant 100 défaillant.

Si ces trois vérifications sont validées, alors le dispositif communicant 100 est toujours en position verrouillée et communique toujours correctement avec le système de supervision, et la supervision peut continuer.

Les principes de présentation, de sélection, de tri, de prise en compte et d'inhibition des alertes sont similaires aux mécanismes de gestion d'alarme standard des superviseurs du commerce (SCADA).

Il est préférable que toute alerte confirmée dans l'application de gestion fasse l'objet d'une nouvelle pose d'un dispositif communicant 100 en local.

L'application de supervision gère un signal de vie, c'est à dire qu'elle est capable d'avertir l'utilisateur de l'état de son fonctionnement. Si l'application de supervision est amenée à s'arrêter, puis à redémarrer, cela peut amener l'équipe de conduite à reposer tous les dispositifs de verrouillage cadenas. Afin d'éviter cela, il est possible de permettre le redémarrage de la supervision et d'acquitter les alertes, bien que plusieurs cycles de transmission aient été ratés.

Lorsqu'un dispositif communicant 100 doit être déposé, par exemple lorsque l'état de charge de ses moyens d'alimentation locale devient insuffisant, une étape 237 de dépose est effectuée.

Tout comme pour la pose, la dépose du dispositif communicant 100 est préparée dans le bureau des consignations, sur l'outil de supervision. Pour chaque dépose, le chargé de consignations ou le chef d'exploitation renseigne la position de l'équipement, ainsi que la date prévue de l'intervention.

Lorsque la demande de dépose est validée, le système de supervision peut indiquer par un code couleur et/ou dans une liste spécifique, que la dépose est programmée. Dans l'outil de supervision, une alerte peut être programmée pour prévenir qu'une consignation dont on a prévu la dépose n'a toujours pas été retirée.

Lorsque la demande de dépose est validée, l'opérateur peut aller effectuer une étape de dépose du le dispositif communicant 100 de la consignation concernée. La supervision est maintenue tant que l'opérateur n'a pas déposé le dispositif communicant 100.

Toute demande de dépose de consignation fait l'objet d'une demande depuis l'interface de supervision. Par une couleur spécifique, ou par une identification graphique, la demande de dépose est signalée sur l'interface de supervision. En cas de détection d'un changement de position de l'équipement non initialement prévu, la supervision reste active, les mécanismes de prise en compte, d'acquittement restent valides et actifs.

Sur le terrain, lors de l'étape de dépose 237, le déblocage des moyens de verrouillage provoque une demande de désactivation de la supervision. De préférence, la supervision n'est désactivée que si elle a fait l'objet d'une demande depuis l'interface de supervision et que le moyen d'activation du dispositif a été manipulé dans ce but. Si ces deux conditions ne sont pas réunies, la supervision est maintenue. Si par ailleurs le dispositif communicant de consignation n'a pas été retiré avant la date prévue, alors une alerte est générée.

Lorsque la demande de désactivation de la supervision est émise, les deux unités d'affichage 131 et 133 peuvent changer d'état, par exemple clignoter alternativement en rouge. L'électronique du dispositif communicant 100 envoie un message de fin de mise en place, ainsi qu'un message de diagnostic associé pour communiquer le dernier niveau de charge des moyens d'alimentation locale. Le dispositif communicant 100 s'arrête ensuite par lui-même.

L'application de supervision enregistre les informations de dépose : repère fonctionnel de l'équipement, repère fonctionnel du dispositif communicant de consignation, position juste avant dépose, date et heure de dépose. Lorsque la mise hors supervision est confirmée par le superviseur, les deux moyens d'affichage 131 et 133 peuvent changer d'état, par exemple clignoter alternativement en vert durant une minute.

Un journal de bord de l'application de supervision peut être tenu pour conserver l'historique des événements de consignation. Ce journal de bord contient la liste des consignations posées. Cette liste peut être triée en fonction des caractéristiques suivantes : heure et date de pose, présence ou non d'une alarme, niveau des batteries, état de la consignation (en pose, posée, double vérification effectuée, active, alarme prise en compte, demande dépose effectuée, dépose effectuée).

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

La présente invention trouve avantageusement une application à la supervision de la consignation d'une multitude d'équipements à positionner dans une position fixe, en particulier dans des installations industrielles de grande taille comportant des kilomètres de canalisation avec un grand nombre de vannes à surveiller, comme les centrales nucléaires, thermiques ou à gaz, les industries pétrolières, chimiques, ou sidérurgiques.

L'utilisation d'un dispositif communicant de consignation selon la présente invention peut également trouver un intérêt dans l'industrie manufacturière (processus batch) pour bloquer des équipements dans des positions sûres afin de limiter tout accident potentiel, par exemple pour bloquer des ponts roulants, des robots d'assemblage ou des moteurs entre autres.

## Revendications

1. Dispositif communicant de consignation d'un équipement comprenant des moyens de verrouillage (101) aptes à maintenir l'équipement (1) dans une position fixe, un module de communication (110) apte à communiquer au moins des données relatives auxdits moyens de verrouillage et un module d'alimentation locale (120) adapté pour alimenter électriquement au moins le module de communication, **caractérisé en ce que** le module d'alimentation locale comprend une unité de supervision de charge (123) arrangée pour mesurer le niveau de charge du module d'alimentation locale.

2. Dispositif communicant de consignation selon la revendication 1, **caractérisé en ce qu**e le module de communication comprend une unité de transmission (111) connectée à l'unité de supervision de charge (123) et arrangée pour transmettre à un système de supervision distant au moins une donnée de charge déterminée en fonction du niveau de charge mesuré.

3. Dispositif communicant de consignation selon la revendication 2, caractérisé en ce la donnée de charge est proportionnelle au niveau de charge mesuré.

4. Dispositif communicant de consignation selon l'une des revendications 2 ou 3, **caractérisé en ce que** ladite donnée de charge est mesurée avec une fréquence de mesure (f_{M}) prédéterminée et l'unité de transmission (111) est activée périodiquement, avec une première fréquence de transmission prédéterminée (f_{Tx,M}) inférieure à la fréquence de mesure (f_{M}), pour transmettre ladite donnée de charge au système de supervision distant

5. Dispositif communicant de consignation selon l'une des revendications précédentes, **caractérisé en ce qu**e le module de communication (110) comprend au moins une première unité d'affichage (131) connectée au module de supervision de charge et arrangée pour produire au moins un affichage prédéterminé en fonction du niveau de charge mesuré.

6. Dispositif communicant de consignation selon l'une des revendications précédentes, **caractérisé en ce qu**'il comporte un module de test (103) connecté aux moyens de verrouillage et arrangé pour mesurer la variation d'au moins un paramètre desdits moyens de verrouillage à une fréquence de test (f_{Test}) prédéterminée et l'unité de transmission (111) est activée périodiquement, avec une deuxième fréquence de transmission (f_{Tx,Test}) prédéterminée inférieure à la fréquence de test (f_{Test}), pour transmettre au système de supervision distant une donnée de consignation déterminée en fonction de la variation mesurée.

7. Dispositif communicant de consignation selon l'une des revendications précédentes, **caractérisé en ce qu**'il comporte un moyen d'identification (105) passif électriquement.

8. Réseau de supervision d'une pluralité d'équipements comportant une pluralité de dispositifs communicant de consignation selon l'une des revendications précédentes et un serveur de supervision apte à recevoir des données de chacun desdits dispositifs communicant de consignation, **caractérisé en ce que** chaque équipement de ladite pluralité d'équipements est bloqué dans une position fixe par au moins un desdits dispositifs communicant de consignation.

9. Procédé de supervision du verrouillage d'un équipement par un dispositif communicant de consignation alimenté par un module d'alimentation locale, le procédé comprenant l'association (204) du dispositif communicant de consignation communicant avec l'équipement placé dans une position fixe suivie de la supervision (213) du dispositif communicant de consignation communicant, **caractérisé en ce que** l'étape de supervision (213) comprend la mesure (223) du niveau de charge de l'alimentation locale.

10. Procédé de supervision selon la revendication 9, **caractérisé en ce que** l'étape de supervision (213) comprend la transmission (225) à un système de supervision d'au moins une donnée de charge déterminée en fonction du niveau de charge mesuré et/ou l'activation d'une unité d'affichage du dispositif en fonction du niveau de charge mesuré.

11. Procédé de supervision selon la revendication 9, dans lequel la mesure du niveau de charge de l'alimentation locale est effectué périodiquement à une fréquence de mesure (f_{M}) prédéterminée, **caractérisé en ce que** l'étape de transmission (225) comprend l'activation périodique d'une unité de transmission, avec une première fréquence de transmission prédéterminée (f_{Tx,M}) inférieure à ladite fréquence de mesure (f_{M}), pour transmettre ladite donnée de charge au système de supervision distant.

12. Procédé de supervision selon l'une des revendications 9 à 11, dans lequel le dispositif communicant de consignation comporte des moyens de verrouillage aptes à verrouiller l'équipement dans une position fixe, **caractérisé en ce que** l'étape de supervision (213) comporte une sous-étape de test (221) durant laquelle la variation d'au moins un paramètre desdits moyens de verrouillage est mesurée périodiquement avec une fréquence de test prédéterminée (f_{Test}), l'étape de transmission comprenant l'activation périodique d'une unité de transmission, avec une deuxième fréquence de transmission prédéterminée (f_{Tx,Test}) inférieure à ladite fréquence de test (f_{Test}), pour transmettre au système de supervision distant une donnée de consignation déterminée en fonction de la variation mesurée.

13. Procédé de supervision selon l'une des revendications 9 à 12, **caractérisé par** l'émission d'un signal d'alerte (233,235) si aucune donnée n'est reçue du dispositif communicant par le système de supervision pendant une durée supérieure à un nombre prédéterminé de cycles de transmission (229) ou en fonction de la donnée de charge et/ou de consignation reçue (227,231).

14. Procédé de supervision selon l'une des revendications 9 à 13, dans lequel le dispositif communicant de consignation comporte un premier moyen d'identification passif électriquement et l'équipement présente un deuxième moyen d'identification passif électriquement, **caractérisé en ce que** l'étape d'association (204) comporte une sous-étape d'association virtuelle (203) du dispositif et de l'équipement pendant laquelle lesdits moyens d'identification sont lus par un dispositif portable et associés dans une mémoire dudit dispositif portable.

15. Procédé de supervision selon l'une des revendications 9 à 14, **caractérisé par** la préparation préalable du dispositif (201) comprenant la vérification de la dernière donnée de charge transmise au système de supervision par le dispositif communicant

16. Procédé de supervision selon l'une des revendications 9 à 15, **caractérisé par** l'activation (208) du dispositif communicant suite à son association (204) avec l'équipement et la vérification (211) de la communication entre le dispositif communicant et le système de supervision distant.
